(19) Europäisches Patentamt
European Patent Office
Office européen des brevets

(11) EP 3 990 507 B1

(12) EUROPEAN PATENT SPECIFICATION

(45) Date of publication and mention of the grant of the patent:
**07.08.2024 Bulletin 2024/32**

(21) Application number: **20746748.1**

(22) Date of filing: **29.05.2020**

(51) International Patent Classification (IPC):
***C08F 220/14*** (2006.01) ***C08F 220/18*** (2006.01)
***C08F 265/06*** (2006.01) ***C08F 285/00*** (2006.01)
***C08F 2/26*** (2006.01) ***C08F 2/38*** (2006.01)
***C08F 4/40*** (2006.01)

(52) Cooperative Patent Classification (CPC):
(C-Sets available)
**C08F 4/40; C08F 2/26; C08F 2/38; C08F 220/14; C08F 220/1804; C08F 265/06; C08F 285/00**

(Cont.)

(86) International application number:
**PCT/US2020/035066**

(87) International publication number:
**WO 2020/263495 (30.12.2020 Gazette 2020/53)**

(54) **ALLYLIC FUNCTIONAL THERMOPLASTIC ADDITIVES FOR THERMOSETTING POLYMERS**

ALLYLISCHE FUNKTIONELLE THERMOPLASTISCHE ADDITIVE FÜR WÄRMEHÄRTENDE POLYMERE

ADDITIFS THERMOPLASTIQUES À FONCTION ALLYLIQUE POUR LES POLYMÈRES THERMODURCISSABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2019 US 201962868027 P**

(43) Date of publication of application:
**04.05.2022 Bulletin 2022/18**

(73) Proprietor: **Rohm and Haas Company**
**Collegeville, PA 19426 (US)**

(72) Inventors:
- **GUO, Hailan**
  **Collegeville, Pennsylvania 19426 (US)**
- **WILLS, Morris**
  **Collegeville, Pennsylvania 19426 (US)**

(74) Representative: **Beck Greener LLP**
**Fulwood House**
**12 Fulwood Place**
**London WC1V 6HR (GB)**

(56) References cited:
**EP-A1- 3 369 788 WO-A1-2018/033444**

- **S. V. KURMAZ ET AL: "Branched poly(methyl methacrylates) modified by C60 fullerenes", RUSSIAN JOURNAL OF GENERAL CHEMISTRY., vol. 83, no. 3, 1 March 2013 (2013-03-01), RU, pages 496 - 509, XP055724731, ISSN: 1070-3632, DOI: 10.1134/S107036321303016X**
- **D.I. KAMALOVA ET AL: "Free volume distribution of branched poly(methyl methacrylates): Conformational probes study", JOURNAL OF MOLECULAR STRUCTURE., vol. 1125, 1 December 2016 (2016-12-01), NL, pages 800 - 803, XP055724729, ISSN: 0022-2860, DOI: 10.1016/j.molstruc.2016.08.071**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 990 507 B1

- **ABDRAZAKOVA L R ET AL: "FTIR spectroscopy of conformational probes introduced into fullerene-containing branched poly (methyl methacrylate)", JOURNAL OF PHYSICS: CONFERENCE SERIES, INSTITUTE OF PHYSICS PUBLISHING, BRISTOL, GB, vol. 714, no. 1, 24 May 2016 (2016-05-24), pages 12001, XP020302739, ISSN: 1742-6596, [retrieved on 20160524], DOI: 10.1088/1742-6596/714/1/012001**

(52) Cooperative Patent Classification (CPC): (Cont.)

C-Sets
**C08F 220/14, C08F 220/40;**
**C08F 220/1804, C08F 220/40;**
**C08F 265/06, C08F 220/14;**
**C08F 285/00, C08F 220/14, C08F 220/1812, C08F 220/40**

## Description

### FIELD OF THE INVENTION

The field of this invention is branched polymer additives and thermosetting compositions made from such additives.

### BACKGROUND

Branched acrylic polymers have been proposed. For example, Isaure et al., J. Mater. Chem., 2003, 13, 2701-2710, disclose branched copolymers comprising methyl methacrylate (MMA), a chain transfer agent (CTA), and ethylene glycol dimethacrylate (EGDMA). In these branched acrylic copolymers, Isaure found that at most 4.5% of the pendent double bonds from the EGDMA remain unreacted. S. V. KURMAZ ET AL, RUSSIAN JOURNAL OF GENERAL CHEMISTRY., vol. 83, no. 3, 1 March 2013, pages 496-509, and D.I. KAMALOVA ET AL, JOURNAL OF MOLECULAR STRUCTURE., vol. 1125, 1 December 2016, pages 800-803 and ABDRAZAKOVA L R ET AL ,JOURNAL OF PHYSICS: CONFERENCE SERIES, INSTITUTE OF PHYSICS PUBLISHING, BRISTOL, GB, vol. 714, no. 1, 24 May 2016 disclose branched copolymers of methyl methacrylate (MMA), allyl methacrylate (ALMA) and a chain transfer agent. WO2018/033444A1 discloses a branched polymer wherein the branched polymer is an emulsion reaction product of reactants comprising butyl acrylate, tert-dodecyl mercaptan as a chain transfer agent and allyl methacrylate as a crosslinker.

### SUMMARY OF THE INVENTION

Disclosed herein is a composition comprising a branched polymer which is a reaction product of reactants comprising a combination of two or more monoethylenically unsaturated ester monomers, a chain transfer agent in an amount of 3 to 15 weight percent, and a crosslinker in an amount of 3 to 15 weight percent of a crosslinker, wherein weight percent is based on total amount of reactants, provided the amount of crosslinker is within +/- 5 weight percent the amount of chain transfer agent, and wherein the crosslinker comprises at least two carbon-carbon double bonds having different reactivity. The branched polymer is not cross-linked.

Also disclosed herein thermosetting polymer comprising the above composition.

### BRIEF DESCRIPTION OF THE DRAWINGS

The Figure shows a DMA G' overlay of plaques with and without a high temperature thermal organic peroxide.

### DETAILED DESCRIPTION OF THE INVENTION

Disclosed herein is a branched polymer comprising a crosslinker having at least two carbon-carbon double bonds having different reactivity. The inventors have surprisingly found that a branched polymer comprising a crosslinker having at least two carbon-carbon double bonds having different reactivity can produce a branched acrylic polymer in which at least 80% of the pendent double bonds remain unreacted.

Also disclosed is a thermosetting composition comprising the branched polymer and an acrylic polymer. Applicants have surprisingly found that the branched polymer of the present invention can improve high temperature properties of acrylic polymers.

The branched polymer is a reaction product of reactants comprising one or more monoethylenically unsaturated ester monomers, a chain transfer agent in an amount of 3 to 15 weight percent, and a crosslinker in an amount of 3 to 15 weight percent of a crosslinker, wherein weight percent is based on total amount of reactants.

The crosslinker is a polyfunctional unsaturated monomer comprising at least two carbon-carbon double bonds having different reactivity. Preferably, the crosslinker is selected from allyl methacrylate, allyl acrylate, and combinations thereof. In allyl (meth)acrylate, the allyl group has a different reactivity than the vinyl group. Conventional crosslinkers, such as di(meth)acrylates, have carbon-carbon double bonds with identical reactivity. Using NMR spectroscopy, the inventors have found that the pendent double bonds using crosslinkers having identical reactivity are almost entirely reacted during polymerization to form branch points. The crosslinkers according to the present invention remain substantially unreacted, e.g., at least 80% of the pendent double bonds remain unreacted following polymerization. These unreacted pendent double bonds provide additional opportunity for further grafting.

The crosslinker is present in an amount of at least 3 weight percent. Preferably, the crosslinker is present in an amount less than or equal to 14 weight percent, less than or equal to 13 weight percent, less than or equal to 12 weight percent, less than or equal to 11 weight percent, or less than or equal to 10 weight percent.

The branched polymer is not crosslinked. To avoid crosslinking, the amount of crosslinker is within +/- 5 weight percent the amount of chain transfer agent. Preferably, the amount of crosslinker is within +/- 4 weight percent the amount of chain transfer agent. More preferably, the amount of crosslinker is within +/- 3 weight percent the amount of chain transfer agent.

Surprisingly, the inventors have found that the amount of crosslinker may exceed the amount of chain transfer agent while still forming a branched polymer. Crosslinkers having functional groups with similar activity will form crosslinked polymers when the amount of crosslinker in moles exceeds the amount of chain transfer agent in moles. According to the present invention, the amount of crosslinker in moles can exceed the amount of chain transfer agent without forming a crosslinked polymer.

Suitable monoethylenically unsaturated ester monomers useful in making the branched polymer according to certain embodiments can have the structure R'-C(O)O-R where R is a hydrocarbyl group (e.g. alkyl group or aryl group) and R' is a monoethylenically unsaturated aliphatic group having at least 2 or 3 carbon atoms. Preferably, R is an alkyl group of at least 1 or 2 or 3 carbon atoms. According to certain embodiments R is an alkyl group having no more than 12 or 10 or 8 or 6 or 5 carbon atoms. According to certain embodiments R is an aryl group of 6 to 12 carbon atoms. According to certain embodiments R' has no more than 6 carbon atoms. Examples of suitable monomers include methyl acrylate, butyl acrylate, ethyl hexyl acrylate, ethyl acrylate, methyl methacrylate, butyl methacrylate, cyclohexyl (meth)acrylate, cyclopentyl methacrylate, tetrahydrofurfyl methacrylate, and benzyl (meth)acrylate. In the present invention, a combination of two or more such monoethylenically unsaturated ester monomer is used. For example, a combination of methyl methacrylate and butyl methacrylate can be used. For example, the amount of methyl methacrylate can be at least 20, 30, 40, 50, 60, 70 or 80 weight percent of the reactants and can be for example less than 99.8, 99, 98, 97, 96, 95, 90, or 85 weight percent of the reactants. A second monoethylenically unsaturated ester monomer (e.g. butyl acrylate) can be 0 or greater than 0, 1, 2, 3, 4, or 5 weight percent of the reactants and less than 60, 50, 40, 30, 20, or 10 of the reactants. In certain embodiments, additional monoethylenically unsaturated ester monomers may be used. The combination of the second and additional monoethylenically unsaturated monomer(s) taken together in such embodiments is greater than 0, 1, 2, 3, 4, or 5 weight percent of the reactants and less than 60, 50, 40, 30, 20, or 10 of the reactants.

According to certain embodiments one or more additional monounsaturated addition-polymerizable (e.g., monoethylenically unsaturated) monomers may be included. For example, styrene or acrylonitrile could be added. The amount of such additional monounsaturated addition-polymerizable monomer is preferably less than 10 or 5 weight percent based on weight of the reactants.

Preferably, the monoethylenically unsaturated ester monomer is present in the branched monomer in an amount of at least 65 weight percent based on the total weight of the reactants forming the branched monomer, such as, for example, at least 70 weight percent, at least 75 weight percent, at least 80 weight percent, at least 85 weight percent, or at least 90 weight percent.

The reactants further comprise a chain transfer agent (CTA). The chain transfer agent may be any compound known or found to be useful as a chain transfer agent in polymerization of acrylate or methacrylate monomers. For example, thiol chain transfer agents can be used. Examples of such thiol CTAs include monofunctional and polyfunctional thiols. Monofunctional thiols include, but are not limited to, propyl mercaptan, butyl mercaptan, hexyl mercaptan, octyl mercaptan, dodecyl mercaptan, thioglycolic acid, mercaptopropionic acid, alkyl thioglycollates, e.g. 2-ethyl hexyl thioglycollate or octylthioglycollate, mercaptoethanol, mercaptoundecanoic acid, thiolactic acid, and thiobutyric acid. Polyfunctional thiols include trifunctional compounds such as trimethylol propane tris(3-mercaptopropionate), tetrafunctional compounds such as pentaerythritol tetra(3-mercaptopropionate), pentaerythritol tetrathioglycollate, pentaerythritol tetrathiolactate, pentaerythritol tetrathiobutyrate; hexafunctional compounds such as dipentaerythritol hexa(3-mercaptopropionate), dipentaerythritol hexathioglycollate; octafunctional thiols such as tripentaerythritol octa(3-mercaptopropionate), and tripentaerythritol octathioglycollate. The use of polyfunctional thiols is a useful way to increase the degree of branching in the polymer. Optionally, the chain transfer agent may comprise a mixture of more than one type of compound. Preferably, the CTA is

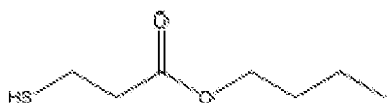

butyl 3-mercaptopropionate (BMP)

The chain transfer agent is present in an amount of at least 3 weight percent. Preferably, the chain transfer agent is present in an amount less than or equal to 14 weight percent, less than or equal to 13 weight percent, less than or equal to 12 weight percent, less than or equal to 11 weight percent, or less than or equal to 10 weight percent.

Alternative chain transfer agents may be any species known to reduce molecular weight in the conventional free-radical polymerization of vinyl monomers. Examples include sulphides, disulphides, halogen-containing species.

Also, catalytic chain transfer agents such as cobalt complexes, e.g. cobalt (II) chelates such as cobalt porphyrin compounds are useful chain transfer agents for the invention. Suitable cobalt chelates are known in the art and are described in WO 98/04603. A particularly suitable compound is bis(borondifluorodimethylglyoximate) cobaltate (II) also known as CoBF. Catalytic chain transfer agents may be used in relatively low concentrations compared to conventional thiol chain transfer agents, e.g. <0.5%, preferably < 0.1% by weight (on monofunctional monomer), since they are generally highly effective at low concentrations. We have surprisingly found that catalytic chain transfer compounds based on cobalt complexes may be very effectively used at concentrations of less than 0.05% by weight (500 ppmw), e.g. 0.0001-0.01% by weight (1-100 ppmw) based on monofunctional monomer in the polymerization process of the present invention to give soluble branched polymers.

According to certain embodiments the cross linker is allyl methacrylate (ALMA), the chain transfer agent is BMP, and the monoethylenically unsaturated ester monomer is selected from methyl methacrylate (MMA) and butyl methacrylate (BMA). Preferably, the MMA or BMA is present in amounts of from 80 to 98 weight percent, the amount of BGDMA is in the range of 1 or 10 weight percent, and the amount of ALMA is in the range of 1 to 10 weight percent based on total weight of MMA or BMA, BMP and ALMA.

The branched polymer can be made using any free-radical polymerization method, e.g. solution, suspension, emulsion and bulk polymerization methods may all be used. For example, conventional emulsion polymerization may be used.

A surfactant or emulsifier may be used to form the branched polymer. Examples of emulsifiers include nonionic, anionic and cationic emulsifiers.

Suitable nonionic emulsifiers are araliphatic or aliphatic nonionic emulsifiers, examples being ethoxylated mono-, di-, and trialkylphenols (degree of ethoxylation: 3 to 50, alkyl radical: $C_4$-$C_{10}$), ethoxylates of long-chain alcohols (degree of ethoxylation: 3 to 100, alkyl radical: $C_8$-$C_{36}$), and also polyethylene oxide/polypropylene oxide homopolymers and copolymers. These may comprise the alkylene oxide units copolymerized in random distribution or in the form of blocks. Highly suitable are, for example, ethylene oxide/propylene oxide block copolymers. Preference is given to using ethoxylates of long-chain alkanols (alkyl radical $C_1$-$C_{30}$, average degree of ethoxylation 5 to 100) and, among these, particular preference to those having a linear $C_{12}$-$C_{20}$ alkyl radical and an average degree of ethoxylation of 10 to 50, and also ethoxylated monoalkylphenols.

Suitable anionic emulsifiers are, for example, alkali metal and ammonium salts of alkyl sulfates (alkyl radical: $C_8$-$C_{22}$), of sulfuric monoesters with ethoxylated alkanols (degree of ethoxylation: 2 to 50, alkyl radical: $C_{12}$-$C_{18}$) and with ethoxylated alkylphenols (degree of ethoxylation: 3 to 50, alkyl radical: $C_4$-$C_9$), of alkylsulfonic acids (alkyl radical: $C_{12}$-$C_{18}$) and of alkylarylsulfonic acids (alkyl radical: $C_9$-$C_{18}$). Further suitable emulsifiers are found in Houben-Weyl, Methoden der organischen Chemie, volume XIV/1, Makromolekulare Stoffe, Georg-Thieme-Verlag, Stuttgart, 1961, pp. 192-208. Also suitable as anionic emulsifiers are bis(phenylsulfonic acid) ethers and their alkali metal or ammonium salts which carry a $C_4$-$C_{24}$ alkyl group on one or both aromatic rings. These compounds are common knowledge, from U.S. Pat. No. 4,269,749, for example, and are available commercially, in the form for example of Dowfax™ 2A1 (Dow Chemical Company).

Suitable cationic emulsifiers are preferably quaternary ammonium halides, e.g., trimethylcetylammonium chloride, methyltrioctylammonium chloride, benzyltriethylammonium chloride or quaternary compounds of N-$C_6$-$C_{20}$-alkylpyridines, - morpholines or -imidazoles, e.g., N-laurylpyridinium chloride.

The amount of emulsifier (or surfactant) can be at least 0.01 or 0.1 weight percent to 10 or 5 weight percent, based on the amount of monomers to be polymerized in the formation of the branched polymer.

Initiators may be used to form the branched polymer. Examples of initiators may be initiated by any suitable method of generating free-radicals such as by thermally induced decomposition of a thermal initiator such as an azo compound, peroxide or peroxyester. Therefore, the polymerization mixture also preferably contains a polymerization initiator which may be any of those known and conventionally used in free-radical polymerization reactions. Examples of azo initiators include azobis(isobutyronitrile) (AIBN), azobis(2-methylbutyronitrile), azobis(2,4-dimethylvaleronitrile), azobis(4-cyanovaleric acid). Examples of peroxide and peroxy initiators include hydrogen peroxide, sodium peroxide, potassium peroxide, t-butyl hydroperoxide, cumene hydroperoxide, dilauroyl peroxide, tert-butyl peroxyneodecanoate, dibenzoyl peroxide, cumyl peroxide, tert-butyl peroxy-2-ethyl hexanoate, tert-butyl peroxy diethyl acetate and tert-butyl peroxy benzoate. Examples of additional initiators include ammonium and/or alkali metal persulfates, sodium perborate, perphosphoric acid and salts thereof, potassium permanganate, and ammonium or alkali metal salts of peroxydisulfuric acid, examples being alkali metal or ammonium peroxy disulfates, diacetyl peroxide, dibenzoyl peroxide, succinyl peroxide, di-tert-butyl peroxide, tert-butyl perbenzoate, tert-butyl perpivalate, tort-butyl peroxy-2-ethylhexanoate, tert-butyl permaleinate, cumene hydroperoxide, diisopropyl peroxydicarbamate, bis(o-toluoyl)peroxide, didecanoyl peroxide, dioctanoyl peroxide, dilauroyl peroxide, tert-butyl perisobutyrate, tert-butyl peracetate, di-tert-amyl peroxide, tert-butyl hydroperoxide, azobisisobutyronitrile, 2,2'-azobis(2-amidino-propane)dihydrochloride or 2,2'-azobis(2-methylbutyronitrile). Also suitable are mixtures of these initiators. As initiators it is also possible to use reduction/oxidation (i.e., redox) initiator systems. The redox initiator systems are composed of at least one, usually inorganic, reducing agent and one

organic or inorganic oxidizing agent. The oxidizing component comprises, for example, the emulsion polymerization initiators already specified above. The reducing component comprises, for example, alkali metal salts of sulfurous acid, such as sodium sulfite, sodium hydrogen sulfite, alkali metal salts of disulfurous acid such as sodium disulfite, bisulfite addition compounds of aliphatic aldehydes and ketones, such as acetone bisulfite or reducing agents such as hydroxymethanesulfinic acid and salts thereof, or ascorbic acid. The redox initiator systems can be used along with soluble metal compounds whose metallic component is able to occur in a plurality of valence states. Typical redox initiator systems are, for example, ascorbic acid/iron(II)sulfate/sodium peroxodisulfate, tert-butyl hydroperoxide/sodium disulfite, tert-butyl hydroperoxide/Na hydroxymethanesulfinate. The individual components, the reducing component for example, may also be mixtures, an example being a mixture of the sodium salt of hydroxymethanesulfinic acid and sodium disulfite.

The amount of initiator is generally at least 0.01 or 0.05 or 0.01 weight percent to 10 or 5 or 3 weight percent based on all of the monomers to be polymerized.

The branched polymers are not cross-linked. For example, this can be demonstrated by evaluating the solubility of the polymers in a solvent such as tetrahydrofuran. A cross-linked polymer will not be soluble.

The branched polymers according to certain embodiments can be characterized by a polymer branching ratio, g', of less than 1, 0.95, 0.9, 0.8. According to some embodiments g' is at least 0.5 or 0.6 or 0.7. The polymer branching ratio (g') is calculated by comparing measured the intrinsic viscosity of the branched polymer ($[\eta]_{branched}$) at each elution volume increment to the intrinsic viscosity of the linear polymer ($[\eta]_{linear}$) with the same molecular weight (M) (Eq. 1) in gel permeation chromatography (GPC) analysis. For a linear polymer, g' value equals to 1 and, for a branched polymer, g' is smaller than 1.

$$g' = \left(\frac{[\eta]_{branched}}{[\eta]_{linear}}\right)_M \qquad \text{(Eq. 1)}$$

Molecular Weight Analysis: The polymer absolute molecular weights ($M_w$, $M_n$), PMMA-relative molecular weights ($M_{w_PMMA}$, $M_{n_PMMA}$), intrinsic viscosity ($[\eta]_w$, $[\eta]_n$), and branching ratio (g') can be measured by gel permeation chromatography with online multi-angle light scattering (MALS) detector, viscometer (VS), and differential refractive index (dRI) detector. For example, the GPC instrument setup can include an Agilent 1200 series HPLC system (degasser, pump, autosampler and column oven), a Wyatt HELEOS II MALS detector, a Wyatt ViscoStar II viscometer, and a Wyatt T-rEX dRI detector. The polymer separation can be carried out on a column set e.g. having two PLgel mixed B LS columns (10 $\mu$m particle size, 7.5 x 300 mm length) using tetrahydrofuran (THF) as the mobile phase at a flow rate of 1 mL/min. Column oven temperature is set at 30 °C. A set of 10 points PMMA standards (Agilent EasiCal PM-1) is used to calibrate the GPC columns and provide the PMMA-relative molecular weight. The absolute molecular weights are obtained from the MALS detection using Zimm formalism and the intrinsic viscosity data are obtained from the viscometer. High molecular weight fractions data (PMMA-relative molecular weight larger than 6500 Da) are used to calculate average g' values. For consistency of g' calculation, a linear PMMA model from Mark-Houwink equation (Eq. 2, where K = 0.0383 mL/g and $\alpha$ = 0.581 for non-BA containing samples in Table 2 and K = 0.03044 mL/g and $\alpha$ = 0.615 for BA containing polymers in Table 2) is used to obtain the ($[\eta]_{linear}$) in Eq. 1 using the M data from MALS detection.

$$[\eta] = KM^{\alpha} \qquad \text{(Eq. 2)}$$

The weight average molecular weight, $M_w$, as measured by GPC of the branched polymer is according to certain embodiments in the range of at least 2,500 or 3,000 or 5,000 or 10,000 or 20,000 or 25,000 g/mol. According to certain embodiments weight average molecular weight is no more than 75,000 or 50,000 g/mol. The number average molecular weight, $M_n$, of the branched polymer as measured by GPC according to certain embodiments is at least 1,250 or 1,500 g/mol. According to certain embodiments the number average molecular weight is no more than 6,000 or 5,000 or 4,500 g/mol.

According to certain embodiments the branched structure is a dendritic structure.

The branched polymer may be used as an additive without any further processing. For example, the branched polymer may be used as oligomeric pre-polymers for thermosetting materials.

Alternatively, the branched polymer may be blended with another polymer to form a composition. The composition may be made by blending the components. According to one embodiment, the components can be cold blended (e.g. mix two aqueous latexes) and then freeze dried or coagulated.

The branched polymer may also be formed as the shell of a core-shell particle. For example, the core may comprise a crosslinked core of butyl acrylate (BA) and allyl methacrylate (ALMA), e.g., 99.3 weight percent BA and 0.7 weight percent ALMA. The branched polymer may then be formed by emulsion polymerization on the core.

According to certain embodiments a thermosetting composition may comprise the branched polymer and an

acrylic polymer or copolymer. Examples of acrylic polymers that may be used include but are not limited to thermoplastic vulcanizates (TPV). Thermoplastic vulcanizates (TPV) are elastomer/thermoplastic polymer blends in which an elastomer phase is cross-linked during the blending process and dispersed in a thermoplastic matrix. Typical TPVs are made from crosslinked EPDM (ethylene propylene diene monomer) dispersed in a matrix of polypropylene. This invention provides acrylate materials for TPV applications.

Key properties of TPVs include (1) resistance to plastic deformation (that is, low compression and tensile set), (2) resistance to fluids, (3) retention of properties at elevated temperature relative to those at ambient temperature, and (4) low creep and stress relaxation.

A crosslinking agent, such as an organic peroxide, preferably a high temperature thermal organic peroxide, may be used to initiate crosslinking in the composition. By using a high temperature thermal organic peroxide, the composition can be cured using reactive extrusion. Preferably, the high temperature thermal organic peroxide has a one hour half-life temperature of at least 130°C, and more preferably at least 135°C. The high temperature thermal organic peroxide has a one hour half-life temperature of less than or equal to 250°C, such as, for example, less than or equal to 225°C or less than or equal to 200°C. Examples of high temperature thermal organic peroxides include, but are not limited to Luperox® 101 (2,5-Bis(tert-butylperoxy)-2,5-dimethylhexane), 2,3-Dimethyl-2,3-diphenylbutane, Bis(tert-butylperoxy)-2,5-dimethylhexane), tert-Butyl hydroperoxide, tert-Amyl hydroperoxide, Cumyl hydroperoxide, 1,1,3,3-Tetramethylbutyl hydroperoxide, Isopropylcumyl hydroperoxide, Isopropylcumyl hydroperoxide, 2,5-Dimethyl-2,5-di(tert-butylperoxy)hexyne-3, 3,6,9-Triethyl-3,6,9-trimethyl-1,4,7-triperoxonane, Di(tert-butyl)peroxide, Di(tert-butylperoxy-isopropyl)benzene, tert-Butyl cumyl peroxide, Di-(tert-amyl)-peroxide, Dicumyl peroxide, and Butyl 4,4-di(tert-butylperoxy)valerate.

Preferably, the thermosetting composition comprises at least 1 or 3 or 5 or 10, or 20, or 30, or 50 weight percent of the branched polymer composition.

The composition may further comprise additional additives as are desired for the final product. Examples of such additives include UV light stabilizers and antioxidants. According to certain embodiments that additives are selected such that the composition remains transparent. Examples of UV light stabilizers include benzophenones, benzotriazoles, triazines, benzoxazinones, hindered amine light stabilizer (HALS) and hindered benzoates. Commercially available UV and light stabilizers are exemplified by Cyasorb Light Absorbers, and Light Stabilizers, and Cyasorb Cynergy Solutions from Solvay, TINUVIN FROM BASF, LowLite from Chemtura, OnCap from PolyOne, and Light Stabilizer 210 from E. I. du Pont de Nemours and Company of Delaware, U.S.A. Examples of antioxidants include phenolic antioxidants, and combinations of phenolic antioxidants with phosphites, thioethers or organic sulfides. Phenolic antioxidants include fully sterically hindered phenols and partially hindered phenols; and sterically hindered amines such as tetramethyl-piperidine derivatives. Suitable phenolic antioxidants include vitamin E and IRGANOX™ 1010 from BASF. IRGANOX™ 1010 comprises pentaerythritol tetrakis(3-(3,5-di-t-butyl-4-hydroxyphenyl)propionate). Additional examples of antioxidants are acetyl cysteine, arbutin, ascorbic acid, ascorbic acid polypeptide, ascorbyl dipalmitate, ascorbyl methylsilanol pectinate, ascorbyl palmitate, ascorbyl stearate, BHA, p-hydroxyanisole, BHT, t-butyl hydroquinone, caffeic acid, Camellia sinensis oil, chitosan ascorbate, chitosan glycolate, chitosan salicylate, chlorogenic acids, cysteine, cysteine HCl, decyl mercaptomethylimidazole, erythorbic acid, diamylhydroquinone, di-t-butylhydroquinone, dicetyl thiodipropionate, dicyclopentadiene/t-butylcresol copolymer, digalloyl trioleate, dilauryl thiodipropionate, dimyristyl thiodipropionate, dioleyl tocopheryl methylsilanol, isoquercitrin, diosmine, disodium ascorbyl sulfate, disodium rutinyl disulfate, distearyl thiodipropionate, ditridecyl thiodipropionate, dodecyl gallate, ethyl ferulate, ferulic acid, hydroquinone, hydroxylamine HCl, hydroxylamine sulfate, isooctyl thioglycolate, kojic acid, madecassicoside, magnesium ascorbate, magnesium ascorbyl phosphate, melatonin, methoxy-PEG-7 rutinyl succinate, methylene di-t-butylcresol, methylsilanol ascorbate, nordihydroguaiaretic acid, octyl gallate, phenylthioglycolic acid, phloroglucinol, potassium ascorbyl tocopheryl phosphate, thiodiglycolamide, potassium sulfite, propyl gallate, rosmarinic acid, rutin, sodium ascorbate, sodium ascorbyl/cholesteryl phosphate, sodium bisulfite, sodium erythorbate, sodium metabisulfide, sodium sulfite, sodium thioglycolate, sorbityl furfural, tea tree (Melaleuca aftemifolia) oil, tocopheryl acetate, tetrahexyldecyl ascorbate, tetrahydrodiferuloylmethane, tocopheryl linoleate/oleate, thiodiglycol, tocopheryl succinate, thiodiglycolic acid, thioglycolic acid, thiolactic acid, thiosalicylic acid, thiotaurine, retinol, tocophereth-5, tocophereth-10, tocophereth-12, tocophereth-18, tocophereth-50, tocopherol, tocophersolan, tocopheryl linoleate, tocopheryl nicotinate, tocoquinone, o-tolyl biguanide, tris(nonylphenyl) phosphite, ubiquinone, zinc dibutyldithiocarbamate, and mixtures thereof. According to certain embodiments the total amount of additives used (if any) is less than 10 or 5 or 3 weight percent based on total weight of the composition.

## EXAMPLES

### Synthesis of Branched Polymer (BMP/MMA/ALMA) (Reference examples)

Branched polymers were formed by emulsion polymerization. The emulsion polymerization was carried out in a 5 liter 4-necked round bottom flask equipped with a mechanical stirrer, heating mantel, thermometer, temperature

controller and $N_2$ inlet. To the reactor was charged 1530 parts of deionized water, 54.55 parts of Na-dodecyl benzene sulfonate surfactant (DS-4, 22% in water), 0.146 parts of $FeSO_4$ and 0.16 parts of acetic acid. The contents of the reactor were heated to 60 °C with an $N_2$ sweep. A monomer emulsion was prepared in a separate container with 234 parts of deionized water, 18.18 parts of DS-4 surfactant (22% in water), 53 parts of allyl methacrylate (ALMA), 696 parts of methyl methacrylate (MMA), and 52 parts of butyl 3-mercaptopropioante (BMP). Mechanical agitation was applied to effect emulsification. The total of the monomer emulsion was 1000 parts. The redox initiator system consists of 2 separate solutions. The first is a 3% (by weight) solution of t-butyl hydroperoxide (t-BHP) in water (oxidant) and the second is a 3% (by weight) solution of sodium formaldehyde sulfoxylate (SFS) in water (reductant), both 53.33 parts total. With the reactor at 60 °C simultaneous feeds (time zero) of the t-BHP and SFS solutions were started at 0.44 parts/minute (both 120 minute feed times) and the monomer emulsion at 16.67 parts/minute (a 60 minute feed time). The reactor temperature was maintained at 60 °C for the entire polymerization process. At the end of the monomer feed (total reaction time 60 minutes from time zero) the t-BHP and SFS continued for another 60 minutes (total reaction time 120 minutes from time zero). The reaction was then cooled to 40 °C and filtered through cheesecloth. The emulsion particle size was measured to be 58 nm (by light scattering), the solids content was 30.5% (by gravimetry) and the residual BA and MMA monomers were both <10 ppm (by headspace gas chromatography). The polymer formed is identified as Example 8 in Table 1 below.

The other examples were prepared by the same process described above and varying the ratio of crosslinker (ALMA) to chain transfer agent (BMP). The glass transition temperature in °C was determined by differential scanning calorimetry (DSC) and solubility was determined in tetrahydrofuran (THF). The results (average of at least 2 samples each) are shown below in Table 1. In Table 1, DP refers to the degree of polymerization, i.e., the number of units for each monomer. The number average molecular weight, $M_n$, was determined by GPC.

Table 1

| | BMP | | ALMA | | MMA | | | | |
|---|---|---|---|---|---|---|---|---|---|
| Example | wt% | DP | wt% | DP | wt% | DP | Tg (C) | THF (%) | Mn |
| 1 | 3 | 1 | 3 | 1.3 | 94 | 51 | 100 | 98 | 4248 |
| 2 | 3 | 1 | 10 | 4.3 | 87 | 47 | 106 | 14 | |
| 3 | 10 | 1 | 3 | 0.4 | 87 | 14 | 43 | 97 | 1662 |
| 4 | 10 | 1 | 10 | 1.3 | 80 | 13 | 47 | 96 | 2263 |
| 5 | 0 | 0 | 0 | 0 | 100 | high | 116 | 96 | |
| 6 | 0 | 0 | 6.5 | xl | 93.5 | xl | 129 | 6 | |
| 7 | 6.5 | 1 | 0 | 0 | 93.5 | 23 | 69 | 97 | 2042 |
| 8 | 6.5 | 1 | 6.5 | 1.3 | 87 | 22 | 75 | 97 | 2857 |
| 9 | 6.5 | 1 | 1.55 | 0.3 | 92 | 23 | 71 | 99 | 2248 |
| 10 | 6.5 | 1 | 11.5 | 2.3 | 88.6 | 20 | 80 | 41 | |
| 11 | 1.55 | 1 | 6.5 | 5.4 | 92 | 96 | 115 | 14 | |
| 12 | 11.5 | 1 | 6.5 | 0.7 | 88.6 | 12 | 39 | 99 | 1697 |

As indicated by their low solubility in THF, Examples 2, 6, 10, and 11 were determined to be crosslinked. Examples 1, 3, 4, 8, 9, and 12 were almost 100% soluble in THF.

NMR spectroscopic analysis was performed on Examples 4, 8, and 12 to determine the amount of unreacted pendent double bonds. The polymer compositions were determined based on their $^{13}C$ NMR integrals and normalized to 100%. The amount of unreacted pendent double bounds was calculated by its double carbon at ~132.0 ppm. The branched ALMA content was estimated based on its side chain $-OCH_2$ ester carbon at ~65.0 ppm. As shown in Table 2, below, at least 80% of the pendent double bonds remained unreacted.

Table 2

| Example | MMA (mol%) | BMP (mol%) | ALMA (Unreacted mol%) | ALMA (Branch wt%) | Total ALMA (mol%) | % Unreacted |
|---|---|---|---|---|---|---|
| 4 | 87.4 | 7.1 | 4.5 | 1.0 | 5.5 | 81.8 |

(continued)

| Example | MMA (mol%) | BMP (mol%) | ALMA (Unreacted mol%) | ALMA (Branch wt%) | Total ALMA (mol%) | % Unreacted |
|---|---|---|---|---|---|---|
| 8 | 91.7 | 4.3 | 3.4 | 0.6 | 4.0 | 85.0 |
| 12 | 88.3 | 7.3 | 3.6 | 0.8 | 4.4 | 81.8 |

As a comparison, NMR analysis was performed on a branched polymer comprising 5 weight percent of BMP, 2.5 weight percent 1,4-butanediol dimethacrylate (BGDMA), 5 weight percent butyl acrylate (BA), and 87.5 weight percent MMA. As expected, around 4% of the pendent double bonds were unreacted in this comparative sample.

Synthesis of Branched Polymer (BMP/BMA/ALMA) (Reference example)

Another branched polymer was prepared in a similar manner as described above except the MMA was substituted with butyl methacrylate. The composition of Example 13 is summarized in Table 3.

Table 3

| | BMP | | ALMA | | BMA | | | |
|---|---|---|---|---|---|---|---|---|
| Example | wt% | DP | wt% | DP | wt% | DP | Tg | Mn |
| 13 | 6.5 | 1 | 6.5 | 1.3 | 87 | 15.3 | 25 | 2497 |

The Tg is calculated using the Fox equation [Bulletin of the American Physical Society 1 , 3 Page 123 (1956)] as follows:

$$\frac{1}{T_g} = \frac{w_1}{T_{g(1)}} + \frac{w_2}{T_{g(2)}}$$

For a copolymer, w1 and w2 refer to the weight fraction of the two comonomers, based on weight of monomers charged to the reaction vessel, and Tg(1) and Tg(2) refer to the glass transition temperatures of the two corresponding homopolymers in degrees Kelvin. For polymers containing three or more monomers, additional terms are added (wn/Tg(n)). The glass transition temperatures of homopolymers for the purposes of this invention are those reported in "Polymer Handbook", edited by J. Brandrup and E. H. Immergut, Interscience Publishers, 1966, unless that publication does not report the Tg of a particular homopolymer, in which case the Tg of the homopolymer is measured by differential scanning colorimetry (DSC).

Thermosetting Polymer (according to the invention)

As described below, a thermosetting polymer was prepared using a first stage comprising an acrylic low Tg crosslinked core, or an acrylic low Tg crosslinked core and high Tg shell polymer, which was then used to form an allylic functional shell stage. The resulting polymer was then mixed with a high temperature thermal organic peroxide to form a thermoset.

The first stage emulsion polymerization was carried out in a 5 liter 4-necked round bottom flask equipped with a mechanical stirrer, heating mantel, thermometer, temperature controller and $N_2$ inlet. To the reactor was charged 880 parts of deionized water, 0.41 parts of acetic acid, 2.62 parts of $Na_2SO_4$, 239.96 parts of an acrylic rubber preform-seed latex (32.0% latex solids, 59 nm), and 2.44 parts of sodium formaldehyde sulfoxylate (SFS). The contents of the reactor were heated to 40 °C with an $N_2$ sweep. A monomer emulsion was prepared in a separate container with 241 parts of deionized water, 72.76 parts of sodium lauryl sulfate (SLS) surfactant (28% in water), 11.36 parts of allyl methacrylate (ALMA) and 1599.03 parts of butyl acrylate (BA). Mechanical agitation was applied to effect emulsification. The total of the monomer emulsion was 1924.22 parts. With the reaction at 40 °C, 711.96 parts of the monomer emulsion were added along with 1.09 parts of 70% aqueous t-butyl hydroperoxide (t-BHP). After the polymerization exotherm peaked the reaction was cooled down to 54 °C and 634.99 parts of the monomer emulsion were added along with 0.77 parts of 70% aqueous t-BHP. After the polymerization exotherm peaked the reaction was cooled down to 65 °C and 577.20 parts of the monomer emulsion were added along with 0.79 parts of 70% aqueous t-BHP. After the polymerization exotherm peaked 2 parts of 70% aqueous t-BHP and 1 part of SFS (dissolved in 50 parts of DI water) were added to the reaction.

After a 15 minute hold the reaction was then cooled to 75 °C. This is the end of the acrylic rubber core. Next the shell was prepared onto the rubber core. A monomer emulsion was prepared in a separate container with 30 parts of deionized water, 13.40 parts of SLS surfactant (28% in water) and 112.82 parts of methyl methacrylate (MMA). Mechanical agitation was applied to effect emulsification. With the reaction at 75 °C, the MMA monomer emulsion was added with 0.133 parts of SFS (dissolved in 10 parts of DI water) and 0.056 parts of sodium persulfate (dissolved in 10 parts of DI water). After the polymerization exotherm peaked 0.67 parts of 70% aqueous t-BHP and 0.48 parts of SFS (dissolved in 20 parts of DI water) were added to the reaction 4 times, once every 10 minutes. After a 15 minute hold the reaction was cooled to 40 °C and filtered through cheesecloth. The emulsion particle size was measured to be 169 nm (by light scattering), and the solids content was 54.2% (by gravimetry).

The second stage emulsion polymerization was carried out in a 5 liter 4-necked round bottom flask equipped with a mechanical stirrer, heating mantel, thermometer, temperature controller and $N_2$ inlet. To the reactor was charged 779.71 parts of deionized water, 1290.56 parts of the acrylic core-shell, stage (C), (54.2% latex solids), 0.055 parts of $FeSO_4$ and 1.5 parts of methyl-β-cyclodextrin. The contents of the reactor were heated to 60 °C with an $N_2$ sweep. A monomer emulsion was prepared in a separate container with 67.23 parts of deionized water, 27.27 parts of DS-4 surfactant (22% in water), 19.5 parts of allyl methacrylate (ALMA), 182.70 parts of methyl methacrylate (MMA), 78.3 parts of lauryl methacrylate (LMA) and 19.5 parts of butyl 3-mercaptopropioante (BMP). Mechanical agitation was applied to effect emulsification. The total of the monomer emulsion was 375 parts. The redox initiator system consists of 2 separate solutions. The first is a 3% (by weight) solution of t-butyl hydroperoxide (t-BHP) in water (oxidant) and the second is a 3% (by weight) solution of sodium formaldehyde sulfoxylate (SFS) in water (reductant), both 30.00 parts total. With the reactor at 60 °C simultaneous feeds (time zero) of the t-BHP and SFS solutions were started at 0.25 parts/minute (both 120 minute feed times) and the monomer emulsion at 6.25 parts/minute (a 60 minute feed time). The reactor temperature was maintained at 60 °C for the entire polymerization process. At the end of the monomer feed (total reaction time 60 minutes from time zero) the t-BHP and SFS continued for another 60 minutes (total reaction time 120 minutes from time zero). The reaction was then cooled to 40 °C and filtered through cheesecloth. The emulsion particle size was measured to be 184 nm (by light scattering), and the solids content was 36.7% (by gravimetry).

The polymer powder samples were isolated by freeze drying using a vacuum oven. Peroxide Luperox 101 (1.5%) was incorporated prior to isolation (the peroxide was predispersed in DI water containing 6.7% surfactant DS4).

The powder samples with and without peroxide were processed using CARVER press (Carver Press Inc., Menomonee Falls, Wisconsin) with an operating temperature of 160°C and pressing conditions of 2.268 tons for 3 minutes, followed by 9.07 tons at 185°C for 5 minutes, and a 5-minute cooling period (room temperature) at 9.07 tons.

DMA (dynamic mechanical analysis) tests were conducted on a Rheometrics Mechanical Spectrometer (RMS-800) using 8 mm diameter aluminum disposable plate fixtures. A Dynamic Temperature Ramp Mode was used for testing the samples from 150 °C to -80 °C at a cooling rate of 2 deg/min, using an applied frequency of 6.28 rad/s. The AutoStrain option was employed for testing with the initial strain set for 0.2% and a maximum strain limit of 5% to ensure the test conditions remained in the linear viscoelastic regime. The fixtures were zeroed at the initial test temperature of 150 °C. The thickness of the sample was measured using the instrument micrometer after loading the sample between the parallel plates. The test was started after equilibrating for approximately 10 min at 150 °C. The dynamic storage G' was recorded as a function of temperature for each sample. The Figure shows a DMA Gaeoverlay of plaques with and without Luperox 101.

Table 4

| Material | Optical clarity | Mechanical strength | G' value at 70°C to 150°C (DMA) |
|---|---|---|---|
| MLK6863 plaque | translucent | weak | low |
| MLK6863 w/Luperox 101 plaque | transparent | strong | higher |
| MLK6865 plaque | translucent | weak | low |
| MLK 6865 w/ Luperox 101 plaque | transparent | strong | higher |

| Sample Label | Peak tan □ (°C) |
|---|---|
| MLK6863 with Luperox 101 | -30, 62 |
| MLK6863 | -33, 58 |
| MLK6865 with Luperox 101 | -27, 60 |
| MLK6865 | -27, 57, 97 |

## Claims

1. A branched polymer, wherein the branched polymer is a reaction product of reactants comprising a combination of two or more monoethylenically unsaturated ester monomers, a chain transfer agent in an amount of 3 to 15 weight percent, and a crosslinker in an amount of 3 to 15 weight percent of a crosslinker, wherein weight percent is based on total amount of reactants, provided the amount of crosslinker is within +/- 5 weight percent of the amount of chain transfer agent, wherein the crosslinker comprises at least two carbon-carbon double bonds having different reactivity.

2. The branched polymer of claim 1 wherein the branched polymer is not cross-linked

3. The branched polymer of claim 1 or 2 wherein the two or more monoethylenically unsaturated ester monomers have the structure R'-C(O)O-R where R is a hydrocarbyl group of 1 to 12 carbon atoms and R' is a monoethylenically unsaturated aliphatic group having at least 2 or 3 carbon atoms.

4. The branched polymer of claim 3 wherein the combination of two or more monoethylenically unsaturated ester monomers comprises methyl methacrylate and butyl methacrylate.

5. The branched polymer of any of the preceding claims wherein the chain transfer agent is selected from the group consisting of propyl mercaptan, butyl mercaptan, hexyl mercaptan, octyl mercaptan, dodecyl mercaptan, thioglycolic acid, mercaptopropionic acid, alkyl thioglycollates, mercaptoethanol, mercaptoundecanoic acid, thiolactic acid, thiobutyric acid, trimethylol propane tris(3-mercaptopropionate), pentaerythritol tetra(3-mercaptopropionate), pentaerythritol tetrathioglycollate, pentaerythritol tetrathiolactate, pentaerythritol tetrathiobutyrate; dipentaerythritol hexa(3-mercaptopropionate), dipentaerythritol hexathioglycollate; tripentaerythritol octa(3-mercaptopropionate), tripentaerythritol octathioglycollate, butyl 3-mercaptopropioante and combinations of two or more thereof.

6. The branched polymer of any of the preceding claims wherein the cross-linker is selected from the group consisting of allyl methacrylate, allyl acrylate, and combinations thereof.

7. The branched polymer of any of the preceding claims wherein the amount of cross-linker is from 3 to 10 weight percent.

8. The branched polymer of any of the preceding claims wherein the amount of chain transfer agent is from 3 to 10 weight percent.

9. The branched polymer of any of the preceding claims wherein the amount of crosslinker is within +/- 3 weight percent the amount of chain transfer agent.

10. A thermosetting composition comprising an acrylic polymer and the branched polymer according to any of the preceding claims.

11. The composition of claim 10 wherein the branched polymer is grafted to the acrylic polymer.

12. A molded article formed from the thermosetting composition according to claim 10 or 11.

## Patentansprüche

1. Verzweigtes Polymer, wobei das verzweigte Polymer ein Reaktionsprodukt von Reaktanten ist, umfassend eine Kombination aus zwei oder mehr monoethylenisch ungesättigten Estermonomeren, ein Kettenübertragungsmittel in einer Menge von 3 bis 15 Gewichtsprozent, und einen Vernetzer in einer Menge von 3 bis 15 Gewichtsprozent Vernetzer, wobei Gewichtsprozent auf einer Gesamtmenge von Reaktanten basiert, vorausgesetzt, dass die Menge des Vernetzers innerhalb von +/- 5 Gewichtsprozent der Menge des Kettenübertragungsmittels ist, wobei der Vernetzer mindestens zwei Kohlenstoff-Kohlenstoff-Doppelbindungen umfasst, die eine unterschiedliche Reaktivität aufweisen.

2. Verzweigtes Polymer nach Anspruch 1 wobei das verzweigte Polymer nicht vernetzt ist.

3. Verzweigtes Polymer nach Anspruch 1 oder 2, wobei die zwei oder mehr monoethylenisch ungesättigten Estermonomere die Struktur R'-C(O)O-R aufweisen, wobei R eine Hydrocarbylgruppe mit 1 bis 12 Kohlenstoffatomen und

R' eine monoethylenisch ungesättigte aliphatische Gruppe ist, die mindestens 2 oder 3 Kohlenstoffatome aufweisen.

4. Verzweigtes Polymer nach Anspruch 3, wobei die Kombination aus zwei oder mehr monoethylenisch ungesättigten Estermonomeren Methylmethacrylat und Butylmethacrylat umfasst.

5. Verzweigtes Polymer nach einem der vorstehenden Ansprüche, wobei das Kettenübertragungsmittel aus der Gruppe ausgewählt ist, bestehend aus Propylmercaptan, Butylmercaptan, Hexylmercaptan, Octylmercaptan, Dodecylmercaptan, Thioglykolsäure, Mercaptopropionsäure, Alkylthioglykolaten, Mercaptoethanol, Mercaptoundecansäure, Thiomilchsäure, Thiobuttersäure, Trimethylolpropantris(3-mercaptopropionat), Pentaerythritoltetra(3-mercaptopropionat), Pentaerythritoltetrathioglykolat, Pentaerythritoltetrathiolactat, Pentaerythritoltetrathiobutyrat; Dipentaerythritolhexa(3-mercaptopropionat), Dipentaerythritolhexathioglykolat; Tripentaerythritolocta(3-mercaptopropionat), Tripentaerythritoloctathioglykolat, Butyl-3-mercaptopropioant und Kombinationen von zwei oder mehr davon.

6. Verzweigtes Polymer nach einem der vorstehenden Ansprüche, wobei der Vernetzer aus der Gruppe ausgewählt ist, bestehend aus Allylmethacrylat, Allylacrylat und Kombinationen davon.

7. Verzweigtes Polymer nach einem der vorstehenden Ansprüche, wobei die Menge des Vernetzers von 3 bis 10 Gewichtsprozent ist.

8. Verzweigtes Polymer nach einem der vorstehenden Ansprüche, wobei die Menge des Kettenübertragungsmittels von 3 bis 10 Gewichtsprozent ist.

9. Verzweigtes Polymer nach einem der vorstehenden Ansprüche, wobei die Menge des Vernetzers innerhalb von +/- 3 Gewichtsprozent der Menge des Kettenübertragungsmittels ist.

10. Wärmehärtbare Zusammensetzung, die ein Acrylpolymer und das verzweigte Polymer nach einem der vorstehenden Ansprüche umfasst.

11. Zusammensetzung nach Anspruch 10, wobei das verzweigte Polymer auf das Acrylpolymer gepfropft ist.

12. Formartikel, der aus der wärmehärtbaren Zusammensetzung nach Anspruch 10 oder 11 geformt ist.

**Revendications**

1. Polymère ramifié, dans lequel le polymère ramifié est un produit de réaction de réactifs comprenant une combinaison de deux ou plusieurs monomères d'ester à insaturation monoéthylénique, un agent de transfert de chaîne en une quantité de 3 à 15 pour cent en poids, et un agent de réticulation en une quantité de 3 à 15 pour cent en poids d'un agent de réticulation, dans lequel le pourcentage en poids est basé sur la quantité totale de réactifs, à condition que la quantité d'agent de réticulation soit dans la plage de +/- 5 pour cent en poids de la quantité d'agent de transfert de chaîne, dans lequel l'agent de réticulation comprend au moins deux doubles liaisons carbone-carbone ayant une réactivité différente.

2. Polymère ramifié selon la revendication 1, dans lequel le polymère ramifié n'est pas réticulé.

3. Polymère ramifié selon la revendication 1 ou 2, dans lequel les deux ou plusieurs monomères d'ester à insaturation monoéthylénique ont la structure R'-C(O)O-R, où R est un groupe hydrocarbyle de 1 à 12 atomes de carbone et R' est un groupe aliphatique à insaturation monoéthylénique ayant au moins 2 ou 3 atomes de carbone.

4. Polymère ramifié selon la revendication 3, dans lequel la combinaison d'au moins deux monomères esters à insaturation monoéthylénique comprend le méthacrylate de méthyle et le méthacrylate de butyle.

5. Polymère ramifié selon l'une quelconque des revendications précédentes, dans lequel l'agent de transfert de chaîne est choisi dans le groupe constitué par le propyl-mercaptan, le butyl-mercaptan, l'hexyl-mercaptan, l'octyl-mercaptan, le dodécyl-mercaptan, l'acide thioglycolique, l'acide mercaptopropionique, les thioglycolates d'alkyle, le mercaptoéthanol, l'acide mercapto-undécanoïque, l'acide thiolactique, l'acide thiobutyrique, le tris(3-mercaptopropionate) de triméthylolpropane, le tétra(3-mercaptopropionate) de pentaérythritol, le tétrathioglycolate de pentaérythritol, le tétrathiolactate de pentaérythritol, le tétrathiobutyrate de pentaérythritol ; l'hexa(3-mercaptopropionate) de dipentaérythritol, l'hexathioglycolate de dipentaérythritol ; l'octa(3-mercaptopropionate) de tripentaérythritol, l'octathioglycolate de tripentaérythritol, le 3-mercaptopropionate de butyle et des combinaisons de deux de ceux-ci ou plus.

**6.** Polymère ramifié selon l'une quelconque des revendications précédentes, dans lequel l'agent de réticulation est choisi dans le groupe constitué par le méthacrylate d'allyle, l'acrylate d'allyle, et des combinaisons de ceux-ci.

**7.** Polymère ramifié selon l'une quelconque des revendications précédentes, dans lequel la quantité d'agent de réticulation va de 3 à 10 pour cent en poids.

**8.** Polymère ramifié selon l'une quelconque des revendications précédentes, dans lequel la quantité d'agent de transfert de chaîne va de 3 à 10 pour cent en poids.

**9.** Polymère ramifié selon l'une quelconque des revendications précédentes, dans lequel la quantité d'agent de réticulation est dans la plage de +/- 3 pour cent en poids de la quantité d'agent de transfert de chaîne.

**10.** Composition thermodurcissable comprenant un polymère acrylique et le polymère ramifié selon l'une quelconque des revendications précédentes.

**11.** Composition selon la revendication 10, dans laquelle le polymère ramifié est greffé au polymère acrylique.

**12.** Article moulé formé à partir de la composition thermodurcissable selon la revendication 10 ou 11.

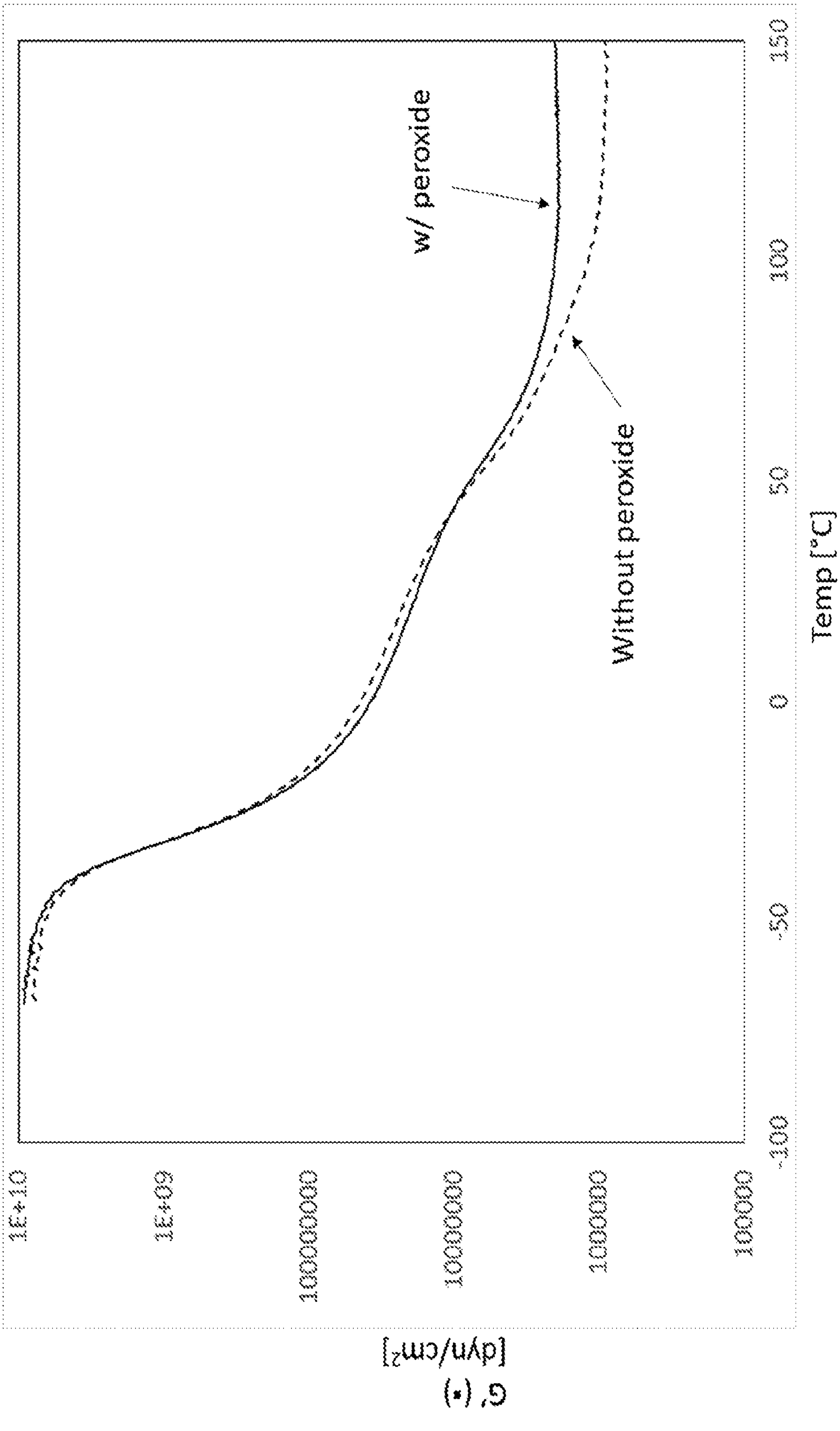
G' (•)
[dyn/cm2]
1E+10
1E+09
100000000
10000000
1000000
100000
-100
-50
0
50
100
150
Temp [°C]
w/ peroxide
Without peroxide

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018033444 A1
- WO 9804603 A
- US 4269749 A

### Non-patent literature cited in the description

- **ISAURE et al.** *J. Mater. Chem.,* 2003, vol. 13, 2701-2710
- **S. V. KURMAZ et al.** *RUSSIAN JOURNAL OF GENERAL CHEMISTRY,* 01 March 2013, vol. 83 (3), 496-509
- **D.I. KAMALOVA et al.** *JOURNAL OF MOLECULAR STRUCTURE.,* 01 December 2016, vol. 1125, 800-803
- **ABDRAZAKOVA L R et al.** *JOURNAL OF PHYSICS: CONFERENCE SERIES, INSTITUTE OF PHYSICS PUBLISHING, BRISTOL, GB,* 24 May 2016, vol. 714 (1
- Methoden der organischen Chemie. **HOUBEN-WEYL.** Makromolekulare Stoffe. Georg-Thieme-Verlag, 1961, vol. XIV/1, 192-208
- *Bulletin of the American Physical Society,* 1956, vol. 1 (3), 123